# EUROPEAN PATENT SPECIFICATION

(11) **EP 2 386 851 B1**
(45) Date of publication and mention of the grant of the patent: **02.11.2016**
(21) Application number: 11165925.6
(22) Date of filing: 12.05.2011
(51) Int. Cl.: G01N 27/416

(54) **Calibration apparatus comprising a chemical sensor**
Kalibrierungsvorrichtung beinhaltend einen chemischen Sensor
Appareil d'étalonnage comprenant un capteur chimique

(30) Priority: 13.05.2010 JP 2010110734
(43) Date of publication of application: 16.11.2011
(73) Proprietor: Yokogawa Electric Corporation, Tokyo 180-8750 (JP)
(72) Inventor: Kiyono, Shinjirou, Tokyo (JP)
(74) Representative: Henkel, Breuer & Partner

(56) References cited:
- US-A1- 2005 183 958
- US-A1- 2005 263 408

## Description

### BACKGROUND OF THE INVENTION

### Field of the Invention

The present invention relates to a calibration apparatus for a chemical sensor that transmits calibration sensitivity data, which is obtained by calibration performed at a predetermined time interval or at any time, to a conversion calculation unit to which a measured value of a chemical sensor whose measurement sensitivity varies over time is input, thereby correcting the measurement sensitivity.

Priority is claimed on Japanese Patent Application No. 2010-110734, filed May 13, 2010.

### Description of the Related Art

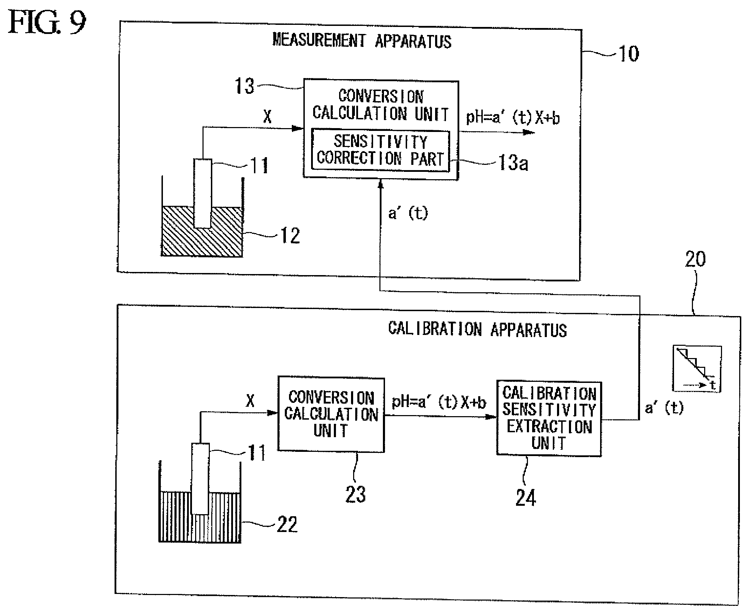

FIG. 9 is a functional block diagram showing a constituent example of a calibration apparatus for a chemical sensor in accordance with the related art. In the following description, a glass electrode type pH sensor is adopted as an example of the chemical sensor. A measurement apparatus 10 includes a measurement solution 12, a pH sensor 11 immersed in the measurement solution 12, and a conversion calculation unit 13. The conversion calculation unit 13 includes a sensitivity correction part 13a. A calibration apparatus 20 includes a calibration solution 22, a pH sensor 11 immersed in the calibration solution 22, a conversion calculation unit 23, and a calibration sensitivity extraction unit 24. In the measurement apparatus 10, the pH sensor 11 measures the measurement solution 12 to obtain a measured value X. The measured value X of the measurement solution 12 is input into the conversion calculation unit 13. The conversion calculation unit 13 calculates a pH value from the measured value X.

When measurement sensitivity of the pH sensor is set as "a," and a bias value representing a zero point is set as "b," the pH value output from the conversion calculation unit 13 is expressed by pH=aX+b. However, the measurement sensitivity "a" of the pH sensor varies over an operating time. To compensate for this variation in sensitivity, the sensitivity correction part 13a performs correction calculation using calibration sensitivity "a'(t)." The calibration sensitivity "a'(t)" is obtained by calibration performed on the pH sensor 11 at a predetermined time interval or at any time. The sensitivity correction part 13a outputs a result of the correction calculation, i.e. pH-a'(t)X+b. Even when the bias value "b" varies over time, the calibration is required. However, for the purpose of simple description, the bias value "b" is regarded herein as an invariable constant.

The pH value of the calibration solution 22 included in the calibration apparatus 20 is a known value. In the calibration apparatus 20, the pH sensor 11 measures the calibration solution 22 at a predetermined time interval or at any time, thereby obtaining a measured value X. The measured value X of the calibration solution 22 is input into the conversion calculation unit 23. The conversion calculation unit 23 calculates the pH value from the measured value X, and outputs a conversion calculation output of pH, pH=a'(t)X+b. The calibration sensitivity extraction unit 24 receives the conversion calculation output of pH, pH=a'(t)X+b, to extract calibration sensitivity "a'(t)." The conversion calculation unit 13 of the measurement apparatus 10 receives the calibration sensitivity "a'(t)" to perform sensitivity correction.

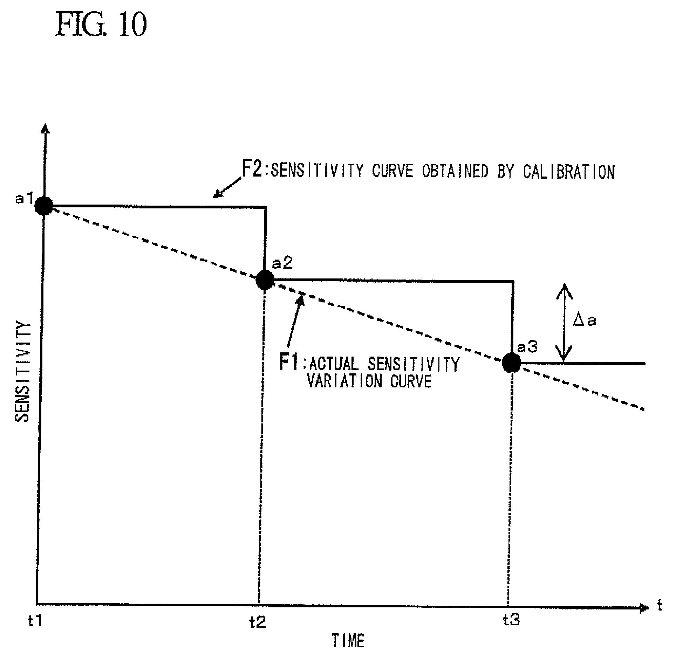

The measurement sensitivity of the pH sensor 11 continuously varies over time. However, in the calibration apparatus 20, the calibration is performed at a predetermined time interval or at any time, and the calibration sensitivity is calculated on the basis of the calibration. As such, the calibration sensitivity is discrete data. FIG. 10 is a characteristic diagram showing a characteristic curve obtained by the calibration apparatus for a chemical sensor in accordance with the related art. In FIG. 10, the transverse axis indicates an elapsed time starting from drive start time t1, and the longitudinal axis indicates sensitivity.

The calibration sensitivity obtained by calibration performed at operation start time t1 is "a1." The calibration sensitivity obtained by calibration performed at time t2 is "a2." The calibration sensitivity obtained by calibration performed at time t3 is "a3." A dotted line F1 represents a variation in actual sensitivity of a sensor. A solid line F2 represents calibration sensitivity obtained by calibration. On the solid line F2, the calibration sensitivity "a1" obtained at time t1 is maintained between times t1 and t2. On the solid line F2, the calibration sensitivity "a2" obtained at time t2 is maintained between times t2 and t3. In this manner, the calibration sensitivity becomes discrete data varying whenever the calibration is performed.

In the apparatus of the related art, as can be seen in FIG. 10, the actual sensor sensitivity F1 and the calibration sensitivity F2 obtained by the calibration are matched to each other at a time when the calibration is performed. However, a deviation occurs over time. This deviation becomes the maximum Δa just before the next calibration is performed.

For this reason, if intervals of the calibration are coarse, a deviation occurs with respect to the actual sensor sensitivity F1. As a result, an error in the pH measured value occurs. Accordingly, to maintain a predetermined precision of measurement, it is necessary to frequently perform the calibration, and thus maintenance becomes very complicated.

A calibration apparatus according to the pre-characterizing part of claims 1 or 5 is known from US 2005/263408 A1.

### SUMMARY

According to the present invention the above object is achieved by a calibration apparatus according to claims 1 or 5 and by a measurement system according to claims 8 or 9. The dependent claims are directed to different advantageous aspects of the invention.

### BRIEF DESCRIPTION OF THE DRAWINGS

The above features and advantages of the present invention will be more apparent from the following description of certain preferred embodiments taken in conjunction with the accompanying drawings, in which:
FIG. 1 is a functional block diagram showing a calibration apparatus for a chemical sensor in according with a first preferred embodiment of the present invention;
FIG. 2 is a characteristic diagram showing a sensitivity variation curve of the calibration apparatus for a chemical sensor in accordance with the first preferred embodiment of the present invention;
FIG. 3 is a functional block diagram showing a calibration apparatus for a chemical sensor in accordance with a second preferred embodiment of the present invention;
FIG. 4 is a characteristic diagram showing a sensitivity variation curve of the sensitivity variation curve shift unit of the calibration apparatus for a chemical sensor in accordance with the second preferred embodiment of the present invention;
FIG 5 is a table showing calibration data collected to verify an effect of the calibration apparatus for a chemical sensor in accordance with the preferred embodiments of the present invention;
FIG. 6 is a characteristic diagram expressing the calibration data of FIG. 5 in a graph;
FIG. 7 is a functional block diagram showing a calibration apparatus for a chemical sensor in accordance with a third preferred embodiment of the present invention;
FIG. 8 is a functional block diagram showing a calibration apparatus for a chemical sensor in accordance with a fourth preferred embodiment of the present invention;
FIG. 9 is a functional block diagram showing a constituent example of a calibration apparatus for a chemical sensor in accordance with the related art; and
FIG. 10 is a characteristic diagram showing a characteristic curve obtained by the calibration apparatus for a chemical sensor in accordance with the related art.

### DETAILED DESCRIPTION OF THE PREFERRED EMBODIMENTS

The present invention will be now described herein with reference to illustrative embodiments. Those skilled in the art will recognize that many alternative embodiments can be accomplished using the teaching of the present invention and that the present invention is not limited to the embodiments illustrated herein for explanatory purposes.

A calibration apparatus for a chemical sensor may include a conversion calculation unit that acquires a measurement value of a calibration solution that is measured by the chemical sensor, the conversion calculation unit calculating and outputting a conversion calculation output, a calibration sensitivity extraction unit that receives the conversion calculation output from the conversion calculation unit, the calibration sensitivity extraction unit extracting a calibration sensitivity from the conversion calculation output, a calibration history storage unit that receives the calibration sensitivity from the calibration sensitivity extraction unit, the calibration history storage unit storing past histories of the calibration sensitivity, and a sensitivity variation curve prediction unit that reads the past histories of the calibration sensitivity, the sensitivity variation curve prediction unit predicting a sensitivity variation curve based on the past histories of the calibration sensitivity, the sensitivity variation curve prediction unit calculating a sensitivity correction value based on the sensitivity variation curve, the sensitivity variation curve prediction unit supplying the sensitivity correction value to a sensitivity correction part that performs a sensitivity correction in a measurement apparatus.

The calibration apparatus may further include a sensitivity variation curve shift unit that causes the predicted sensitivity variation curve to be matched to a newest value of the calibration sensitivity.

The chemical sensor may measure the calibration solution at a predetermined time interval, and the sensitivity variation curve prediction unit updating the sensitivity variation curve and the sensitivity correction value at the predetermined time interval.

The chemical sensor may measure the calibration solution at any time, and the sensitivity variation curve prediction unit updating the sensitivity variation curve and the sensitivity correction value at any time.

The chemical sensor may be any one of a pH meter, a dissolved oxygen (DO) meter, and a chlorine meter.

The sensitivity variation curve may be a straight line.

The sensitivity variation curve may be predicted by using a least squares approximation method.

A calibration apparatus for a chemical sensor may include a conversion calculation unit that acquires a measurement value of a calibration solution that is measured by the chemical sensor, the conversion calculation unit calculating and outputting a conversion calculation output, a calibration zero-point extraction unit that receives the conversion calculation output from the conversion calculation unit, the calibration zero-point extraction unit extracting a calibration zero-point from the conversion calculation output, a calibration history storage unit that receives the calibration zero-point from the calibration zero-point extraction unit, the calibration history storage unit storing past histories of the calibration zero-point, and a zero-point variation curve prediction unit that reads the past histories of the calibration zero-point, the zero-point variation curve prediction unit predicting a zero-point variation curve based on the past histories of the calibration zero-point, the zero-point variation curve prediction unit calculating a zero-point correction value based on the zero-point variation curve, the zero-point variation curve prediction unit supplying the zero-point correction value to a zero-point correction part that performs a zero-point correction in a measurement apparatus.

The calibration apparatus may further include a zero-point variation curve shift unit that causes the predicted zero-point variation curve to be matched to a newest value of the calibration zero-point.

The chemical sensor may measure the calibration solution at a predetermined time interval, and the zero-point variation curve prediction unit updating the zero-point variation curve and the zero-point correction value at the predetermined time interval,

The chemical sensor may measure the calibration solution at any time, and the zero-point variation curve prediction unit updating the zero-point variation curve and the zero-point correction value at any time.

The chemical sensor may be any one of a pH meter, a dissolved oxygen (DO) meter, and a chlorine meter.

The sensitivity variation curve may be a straight line.

The sensitivity variation curve may be predicted by using a least squares approximation method.

A measurement system may include a measurement apparatus and a calibration apparatus. The measurement apparatus may include a conversion calculation unit that acquires a first measurement value of a measurement solution that is measured by a chemical sensor, the conversion calculation unit including a sensitivity correction part. The calibration apparatus may include a conversion calculation unit that acquires a second measurement value of a calibration solution that is measured by the chemical sensor, the conversion calculation unit calculating and outputting a conversion calculation output, a calibration sensitivity extraction unit that receives the conversion calculation output from the conversion calculation unit, the calibration sensitivity extraction unit extracting a calibration sensitivity from the conversion calculation output, a calibration history storage unit that receives the calibration sensitivity from the calibration sensitivity extraction unit, the calibration history storage unit storing past histories of the calibration sensitivity, and a sensitivity variation curve prediction unit that reads the past histories of the calibration sensitivity, the sensitivity variation curve prediction unit predicting a sensitivity variation curve based on the past histories of the calibration sensitivity, the sensitivity variation curve prediction unit calculating a sensitivity correction value based on the sensitivity variation curve, the sensitivity variation curve prediction unit supplying the sensitivity correction value to the sensitivity correction part. The sensitivity correction part may perform a sensitivity correction based on the sensitivity correction value.

The calibration apparatus may further include a sensitivity variation curve shift unit that causes the predicted sensitivity variation curve to be matched to a newest value of the calibration sensitivity.

The chemical sensor may measure the calibration solution at a predetermined time interval, and the sensitivity variation curve prediction unit updating the sensitivity variation curve and the sensitivity correction value at the predetermined time interval.

The chemical sensor may measure the calibration solution at any time, and the sensitivity variation curve prediction unit updating the sensitivity variation curve and the sensitivity correction value at any time.

The chemical sensor may be any one of a pH meter, a dissolved oxygen (DO) meter, and a chlorine meter.

The sensitivity variation curve may be a straight line.

The sensitivity variation curve may be predicted by using a least squares approximation method.

A measurement system may include a measurement apparatus and a calibration apparatus. The measurement apparatus may include a conversion calculation unit that acquires a first measurement value of a measurement solution that is measured by a chemical sensor, the conversion calculation unit including a zero-point correction part. The calibration apparatus may include a conversion calculation unit that acquires a second measurement value of a calibration solution that is measured by the chemical sensor, the conversion calculation unit calculating and outputting a conversion calculation output, a calibration zero-point extraction unit that receives the conversion calculation output from the conversion calculation unit, the calibration zero-point extraction unit extracting a calibration zero-point from the conversion calculation output, a calibration history storage unit that receives the calibration zero-point from the calibration zero-point extraction unit, the calibration history storage unit storing past histories of the calibration zero-point, and a zero-point variation curve prediction unit that reads the past histories of the calibration zero-point, the zero-point variation curve prediction unit predicting a zero-point variation curve based on the past histories of the calibration zero-point, the zero-point variation curve prediction unit calculating a zero-point correction value based on the zero-point variation curve, the zero-point variation curve prediction unit supplying the zero-point correction value to the zero-point correction part. The zero-point correction part may perform a zero-point correction based on the zero-point correction value.

The calibration apparatus may further include a zero-point variation curve shift unit that causes the predicted zero-point variation curve to be matched to a newest value of the calibration zero-point.

The chemical sensor may measure the calibration solution at a predetermined time interval, and the zero-point variation curve prediction unit updating the zero-point variation curve and the zero-point correction value at the predetermined time interval.

The chemical sensor may measure the calibration solution at any time, and the zero-point variation curve prediction unit updating the zero-point variation curve and the zero-point correction value at any time.

The chemical sensor may be any one of a pH meter, a dissolved oxygen (DO) meter, and a chlorine meter.

The sensitivity variation curve may be a straight line.

The sensitivity variation curve may be predicted by using a least squares approximation method.

A calibration apparatus for a chemical sensor in accordance with preferred embodiments of the present invention inhibits a calibration sensitivity deviation from being increased over time for a period from the calibration to the next calibration.

A calibration apparatus for a chemical sensor in accordance with the preferred embodiments of the present invention predicts a future sensitivity variation curve or a zero-point variation curve on the basis of past history information of discretely obtained calibration sensitivity data or calibration zero-point data. Sensitivity correction values or zero-point correction values continuously found by the sensitivity variation curve or the zero-point variation curve are transmitted to a conversion calculation unit. Thus, the calibration apparatus for a chemical sensor of the present invention inhibits a deviation from being increased over time up to next calibration timing.

The calibration apparatus for a chemical sensor of the present invention causes the sensitivity variation curve or the zero-point variation curve to be matched to a newest value of the calibration sensitivity data or the calibration zero-point data obtained discretely. Thus, the deviation at a time of calibration can become zero.

The calibration apparatus for a chemical sensor of the present invention can effectively inhibit the increase of the deviation. Accordingly, it is possible to secure the precision of measurement without increasing the frequency of the calibration. Thus, the maintenance of the chemical sensor required for the calibration is facilitated.

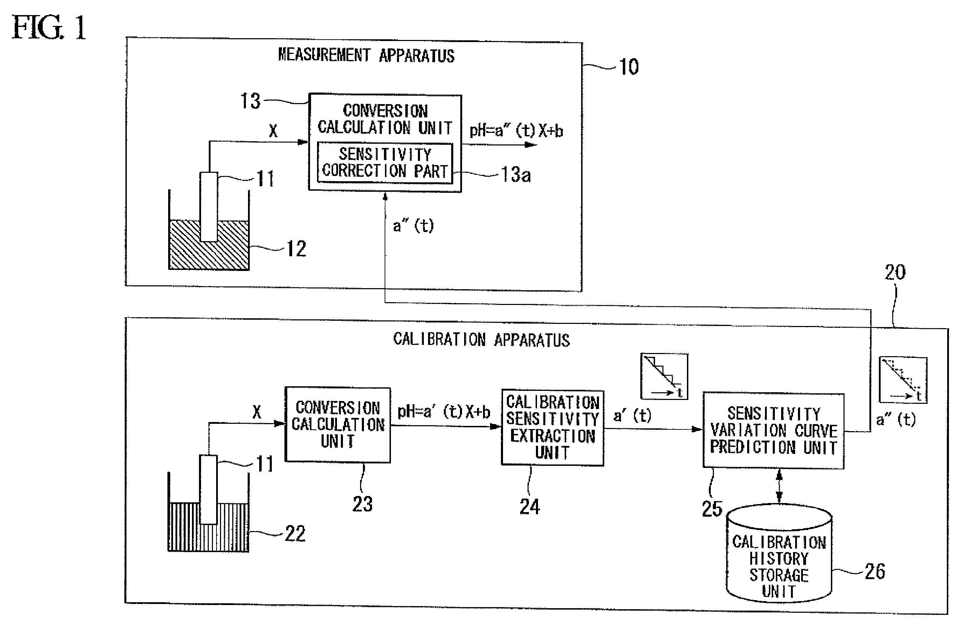

Hereinafter, preferred embodiments of the present invention will be described in detail with reference to the accompanying drawings. FIG 1 is a functional block diagram showing a calibration apparatus for a chemical sensor in according with a first preferred embodiment of the present invention. The same elements as in the configuration of the related art described in FIG. 9 are given the same reference numbers, and a description thereof is omitted.

A measurement apparatus 10 includes a measurement solution 12, a pH sensor 11 immersed in the measurement solution 12, and a conversion calculation unit 13. The conversion calculation unit 13 includes a sensitivity correction part 13a. A calibration apparatus 20 includes a calibration solution 22, a pH sensor 11 immersed in the calibration solution 22, a conversion calculation unit 23, a calibration sensitivity extraction unit 24, a sensitivity variation curve prediction unit 25, and a calibration history storage unit 26. The configuration of the first preferred embodiment is different from the configuration of the related art in that, in the calibration apparatus 20 of FIG. 1, the sensitivity variation curve prediction unit 25 and the calibration history storage unit 26 are provided. The calibration history storage unit 26 stores past histories of calibration sensitivity obtained in a discrete fashion. The sensitivity variation curve prediction unit 25 predicts a sensitivity variation curve to continuously calculate a sensitivity correction value "a"(t)." The sensitivity correction part 13a receives the sensitivity correction value "a"(t)" from the sensitivity variation curve prediction unit 25, and performs sensitivity correction.

In the measurement apparatus 10, the pH sensor 11 measures the measurement solution 12 to obtain a measured value X. The measured value X of the measurement solution 12 is input into the conversion calculation unit 13. The conversion calculation unit 13 calculates and outputs pH=a"(t)X+b,

The pH value of the calibration solution 22 included in the calibration apparatus 20 is a known value. In the calibration apparatus 20, the pH sensor 11 measures the calibration solution 22 at a predetermined time interval or at any time, thereby obtaining a measured value X. The measured value X of the calibration solution 22 is input into the conversion calculation unit 23. The conversion calculation unit 23 calculates the pH value from the measured value X, and outputs a conversion calculation output of pH, pH=a'(t)X+b. The calibration sensitivity extraction unit 24 receives the conversion calculation output of pH, pH=a'(t)X+b, to extract calibration sensitivity "a'(t)." The calibration history storage unit 26 stores past histories of calibration sensitivity a'(t) obtained in a discrete fashion. The sensitivity variation curve prediction unit 25 reads the past histories of calibration sensitivity a'(t), which are stored in the calibration history storage unit 26, and predicts a sensitivity variation curve to continuously calculate a sensitivity correction value "a"(t)." The sensitivity correction part 13a receives the sensitivity correction value "a"(t)" from the sensitivity variation curve prediction unit 25, and performs sensitivity correction.

The sensitivity variation curve prediction unit 25 reads out data from the calibration history storage unit 26, and derives a sensitivity variation curve, which is an average approximate curve of time versus sensitivity variation, from history data of sensitivity at a calibration date and time. This sensitivity variation curve is directed to deriving a curve closer to actual sensitivity variation. Accordingly, this curve may be a straight line or a high order curve having a large number of orders.

To derive the approximate curve, several approaches of, for instance, performing linear approximation using two nearest calibration data, or performing linear approximation using a least squares approximation method based on three or more nearest calibration data, may be taken into consideration. However, the present invention is not limited to a specif approach.

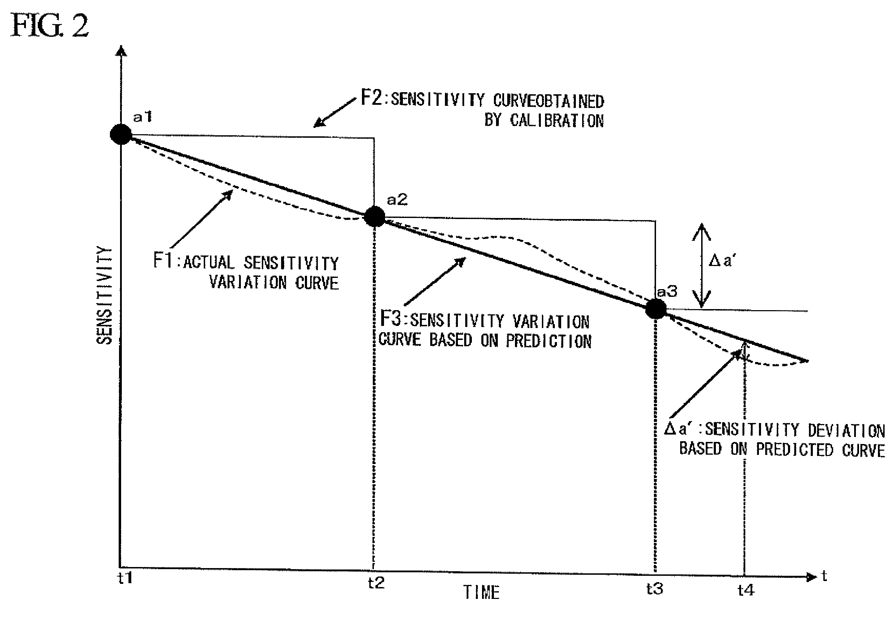

FIG. 2 is a characteristic diagram showing a sensitivity variation curve of the calibration apparatus for a chemical sensor in accordance with the first preferred embodiment of the present invention, In FIG. 2, the transverse axis indicates an elapsed time starting from drive start time t1, and the longitudinal axis indicates sensitivity. A dotted line F1 is a curve representing a variation in actual sensitivity of a sensor. A solid line F2 is a curve representing calibration sensitivity obtained by calibration. The actual sensitivity variation curve F1 and the sensitivity curve F2 obtained by calibration are identical to F1 and F2 shown in FIG. 10 in which the characteristics of the calibration apparatus for a chemical sensor on the basis of the conventional approach have been described.

A thick solid line F3 represents a sensitivity variation curve predicted by the calibration apparatus for a chemical sensor in accordance with the first preferred embodiment of the present invention. In the example of FIG. 2, the sensitivity variation curve F3 is approximated to a straight line that connects calibration sensitivity "a2" obtained at time t2 and calibration sensitivity "a3" obtained at time t3.

In FIG. 2, the predicted sensitivity variation curve F3 and the actual sensitivity variation curve F1 are close to each other. Accordingly, a sensitivity deviation Δa' at time t4 prior to the next calibration timing can be smaller than the maximum deviation Δa in the conventional approach.

In the conventional approach, since the correction calculation is performed for each calibration, the sensitivity deviation becomes almost zero just after the calibration. Meanwhile, when an average value is calculated using the approach of the calibration apparatus for a chemical sensor in accordance with the first preferred embodiment of the present invention, the deviation does not always become zero just after the calibration. Here, even when the least squares approximation method is used, it is preferable to perform calculation so as to pass through the newest calibration point.

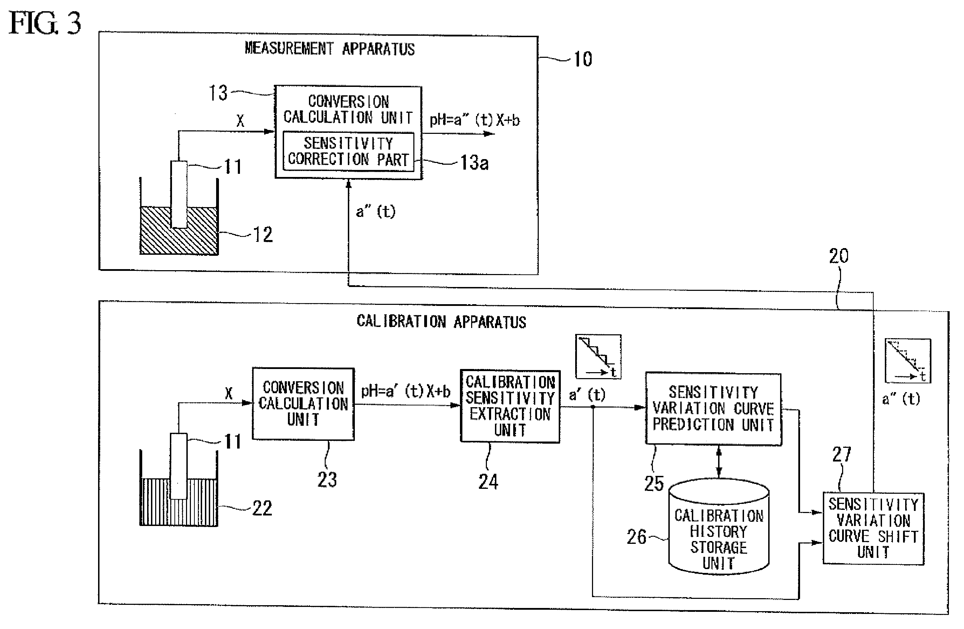

FIG 3 is a functional block diagram showing a calibration apparatus for a chemical sensor in accordance with a second preferred embodiment of the present invention. The configuration of the second preferred embodiment is different from the configuration of FIG. 1 in that the calibration apparatus 20 includes a sensitivity variation curve shift unit 27.

The sensitivity variation curve shift unit 27 causes the sensitivity variation curve obtained by the sensitivity variation curve prediction unit 25 to be matched to a newest value of the calibration sensitivity data obtained discretely, Thus, it is possible to approximate the sensitivity deviation just after the calibration to zero.

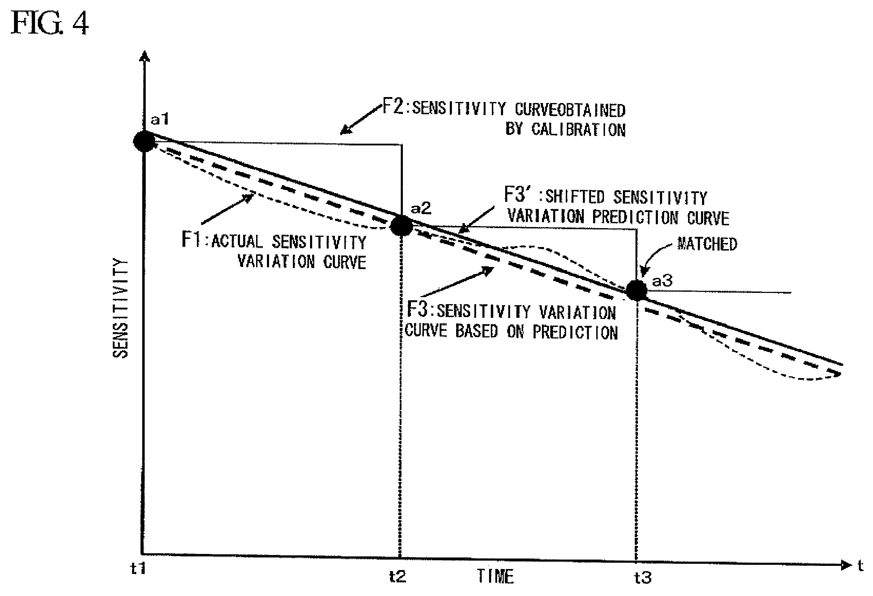

FIG. 4 is a characteristic diagram showing a sensitivity variation curve of the sensitivity variation curve shift unit 27 of the calibration apparatus for a chemical sensor in accordance with the second preferred embodiment of the present invention. The actual sensitivity variation curve F1 and the sensitivity curve F2 obtained by calibration are identical to F1 and F2 shown in FIG. 10 in which the characteristics of the calibration apparatus for a chemical sensor on the basis of the conventional approach have been described. A thick dotted line represents a sensitivity variation curve predicted by the calibration apparatus for a chemical sensor in accordance with the second preferred embodiment of the present invention.

A thick solid line F3' represents a sensitivity variation curve in which the sensitivity variation curve F3 is shifted by the sensitivity variation curve shift unit 27 and is matched to a newest value "a3" of the calibration data. Due to this shift effect, the deviation subsequent to the calibration value forcibly becomes zero. Thus, a sensitivity deviation of calibration sensitivity "a"(t)" read out from the sensitivity variation curve F3' until the next calibration is performed can be smaller than the sensitivity deviation Δa' shown in FIG, 2.

In this manner, according to the calibration apparatus for a chemical sensor in accordance with the second preferred embodiment of the present invention, it is possible to further reduce the sensitivity deviation by continuous approximation to the actual sensitivity curve as well as discrete approximation upon each calibration, and thus to reduce the maximum deviation generated from the conventional approach by several times,

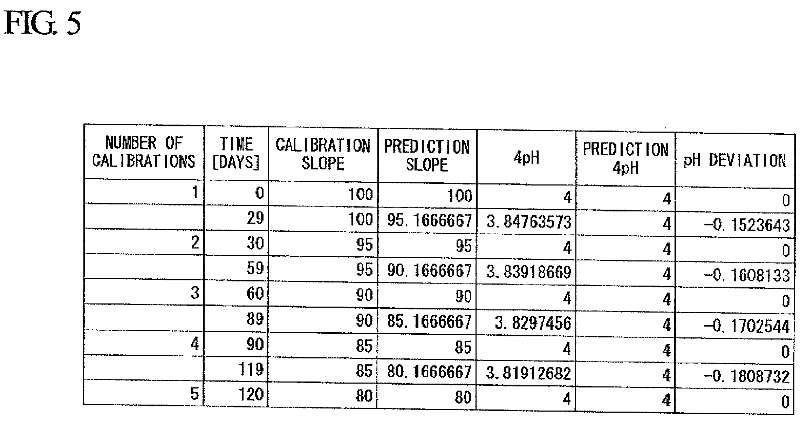

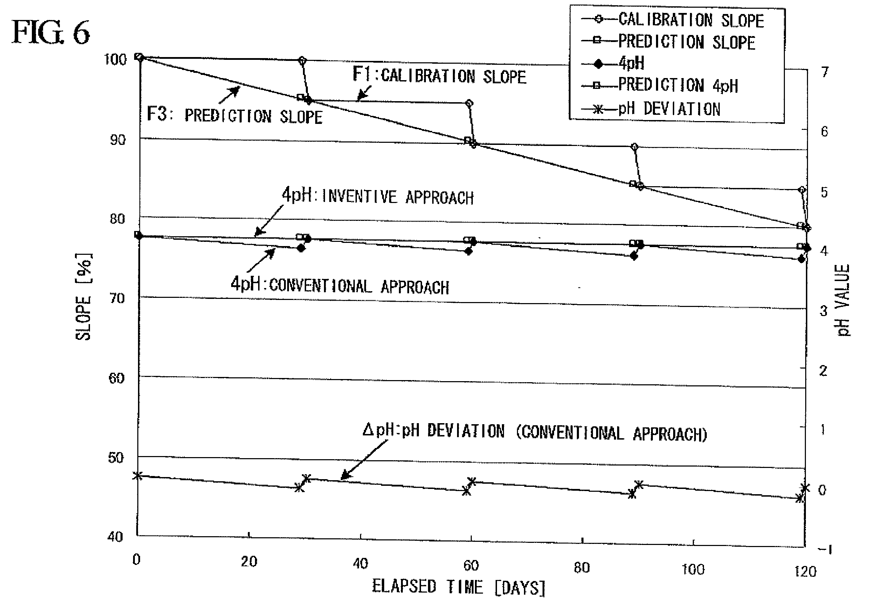

FIG. 5 is a table showing calibration data collected to verify an effect of the calibration apparatus for a chemical sensor in accordance with the preferred embodiments of the present invention. FIG. 6 is a characteristic diagram expressing the calibration, data of FIG. 5 in a graph. A 120-day period of use of a sensor for was set to 120 days, and calibration was performed five times every 30 days. FIG 5 shows a discrete calibration slope, a prediction slope of the present invention, a measured value of 4 pH liquid based on the conventional approach, a measured value of 4 pH liquid based on the inventive approach, and a pH deviation between the conventional approach and the inventive approach.

As can be seen from the data shown in this table, the 4 pH measured value of the inventive approach is invariable. This data directly shows an effect of reducing the deviation by performing the prediction of sensitivity. Meanwhile, a slope obtained by performing typical calibration has a maximum error of measurement just before the calibration is performed, and the maximum error at a time when X X 9 days have elapsed amounts to 0,1$ pH.

FIGS. 1 and 3 show the calibration apparatus in which a chemical sensor to which the present invention is applied is a pH sensor. The chemical sensor to which the present invention can be applied includes a sensor in which measurement sensitivity continuously varies with the elapse of operating time, such as a dissolved oxygen (DO) meter, an oximeter, or the like.

In FIGS. 1 and 3, for the purpose of simple description, a zero point was regarded as an invariable point. It is necessary to correct the zero point by transmitting calibration zero-point data, which is obtained by the calibration performed at a predetermined time interval or at any time, to the conversion calculation unit to which a measured value of a chemical sensor whose measurement sensitivity and zero point vary over time, like a pH sensor, is input.

Next, a calibration apparatus for a chemical sensor in accordance with a third preferred embodiment of the present invention will be described. The calibration apparatus for a chemical sensor in accordance with the third preferred embodiment of the present invention includes a zero-point variation curve prediction unit that predicts a future zero-point variation curve on the basis of past history information of calibration zero-point data discretely obtained by calibration performed at a predetermined time interval or at any time using the same approach as the sensitivity correction approach shown in FIGS. 1 and 3.

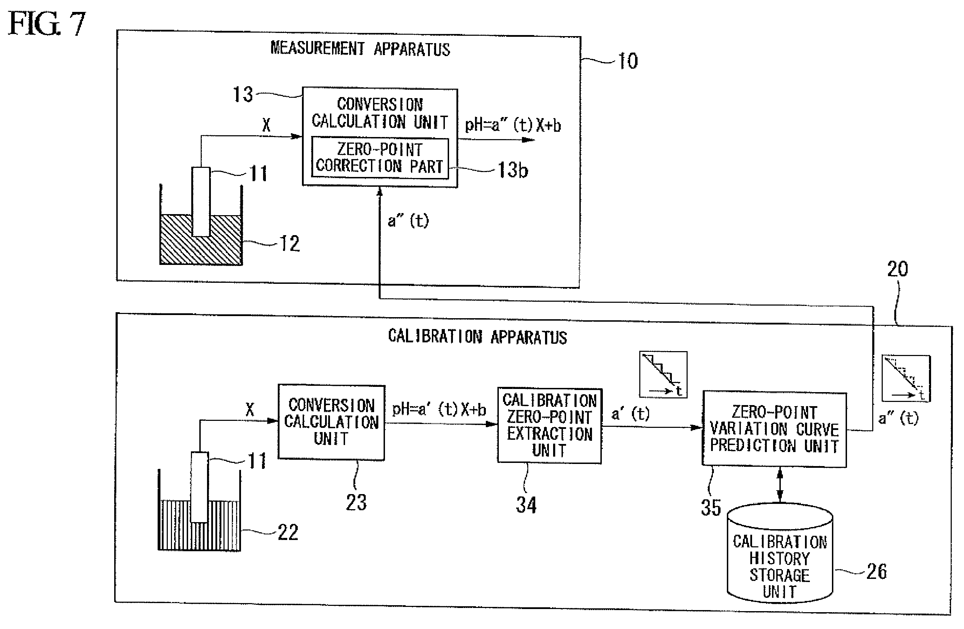

FIG. 7 is a functional block diagram showing a calibration apparatus for a chemical sensor in accordance with the third preferred embodiment of the present invention. A measurement apparatus 10 includes a measurement solution 12, a pH sensor 11 immersed in the measurement solution 12, and a conversion calculation unit 13. The conversion calculation unit 13 includes a zero-point correction part 13b. A calibration apparatus 20 includes a calibration solution 22, a pH sensor 11 immersed in the calibration solution 22, a conversion calculation unit 23, a calibration zero-point extraction unit 34, a zero-point variation curve prediction unit 35, and a calibration history storage unit 26. The zero-point variation curve prediction unit 35 predicts a future zero-point variation curve on the basis of past history information of calibration zero-point data discretely obtained by calibration performed at a predetermined time interval or at any time using the same approach as the sensitivity correction approach shown in FIGS. 1 and 3. The zero-point variation curve prediction unit 35 transmits zero-point correction values found continuously by a zero-point variation curve to the conversion calculation unit 13.

Next, a calibration apparatus for a chemical sensor in accordance with a fourth preferred embodiment of the present invention will be described. The calibration apparatus for a chemical sensor in accordance with the fourth preferred embodiment of the present invention further includes a zero-point variation curve shift unit.

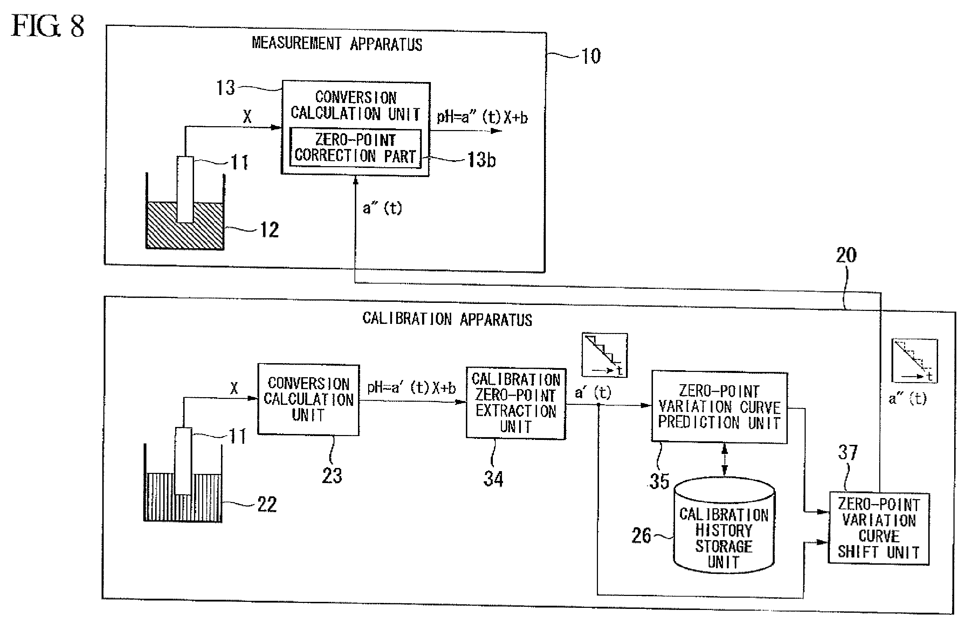

FIG. 8 is a functional block diagram showing a calibration apparatus for a chemical sensor in accordance with the fourth preferred embodiment of the present invention. A measurement apparatus 10 includes a measurement solution 12, a pH sensor 11 immersed in the measurement solution 12, and a conversion calculation unit 13. The conversion calculation unit 13 includes a zero-point correction part 13b. A calibration apparatus 20 includes a calibration solution 22, a pH sensor 11 immersed in the calibration solution 22, a conversion calculation unit 23, a calibration zero-point extraction unit 34, a zero-point variation curve prediction unit 35, a calibration history storage unit 26, and a zero-point variation curve shift unit 37. The zero-point variation curve shift unit 37 causes a predicted zero-point variation curve to be matched to a newest value of discretely obtained calibration zero-point data.

As used herein, the following directional terms "forward, rearward, above, downward, right, left, vertical, horizontal, below, and transverse" as well as any other similar directional terms refer to those directions of an apparatus equipped with the present invention. Accordingly, these terms, as utilized to describe the present invention should be interpreted relative to an apparatus equipped with the present invention.

The term "configured" is used to describe a component, section or part of a device includes hardware and/or software that is constructed and/or programmed to carry out the desired function,

Moreover, terms that are expressed as "means-plus function" in the claims should include any structure that can be utilized to carry out the function of that part of the present invention.

The terms of degree such as "substantially," "about," "nearly", and "approximately" as used herein mean a reasonable amount of deviation of the modified term such that the end result is not significantly changed. For example, these terms can be construed as including a deviation of at least 5 percents of the modified term if this deviation would not negate the meaning of the word it modifies.

The term "unit" is used to describe a component, section or part of a hardware and/or software that is constructed and/or programmed to carry out the desired function. Typical examples of the hardware may include, but are not limited to, a device and a circuit.

While preferred embodiments of the present invention have been described and illustrated above, it should be understood that these are examples of the present invention and are not to be considered as limiting. Additions, omissions, substitutions, and other modifications can be made without departing from the scope of the present invention. Accordingly, the present invention is not to be considered as being limited by the foregoing description, and is only limited by the scope of the claims.

## Claims

1. A calibration apparatus (20) comprising:
a chemical sensor (11) being configured to measure a calibration liquid;
a conversion calculation unit (23) being configured to acquire a measurement value of the calibration solution that is measured by the chemical sensor (11), the conversion calculation unit (23) being configured to calculate and to output a conversion calculation output;
a calibration sensitivity extraction unit (24) being configured to receive the conversion calculation output from the conversion calculation unit (23), the calibration sensitivity extraction unit (24) being configured to extract a calibration sensitivity from the conversion calculation output;
a calibration history storage unit (26) being configured to receive the calibration sensitivity from the calibration sensitivity extraction unit (24), the calibration history storage unit (26) being configured to store past histories of the calibration sensitivity; and
a sensitivity variation curve prediction unit (25) being configured to read the past histories of the calibration sensitivity, the sensitivity variation curve prediction unit (25) being configured to predict a sensitivity variation curve based on the past histories of the calibration sensitivity,
**characterized in that**
the sensitivity variation curve prediction unit (25) is configured to continuously calculate a sensitivity correction value (a"(t)) based on the sensitivity variation curve, and to supply the sensitivity correction value to a sensitivity correction part (13a) for performing a sensitivity correction in a measurement apparatus; and
further comprising a sensitivity variation curve shift unit (27) being configured to cause the predicted sensitivity variation curve to be matched to a newest value of the calibration sensitivity.

2. The calibration apparatus according to claim 1, **characterized in that**
the chemical sensor (11) is configured to measure the calibration solution at a predetermined time interval; and
the sensitivity variation curve prediction unit (25) is configured to update the sensitivity variation curve and the sensitivity correction value at the predetermined time interval.

3. The calibration apparatus according to claim 1, **characterized in that**
the chemical sensor (11) is configured to measure the calibration solution at any time, and the sensitivity variation curve prediction unit (25) is configured to update the sensitivity variation curve and the sensitivity correction value at any time.

4. The calibration apparatus according to claim 1, **characterized in that**
the chemical sensor (11) is any one of a pH meter, a dissolved oxygen (DO) meter, and a chlorine meter.

5. A calibration apparatus (20) comprising:
a chemical sensor (11) being configured to measure a calibration liquid;
a conversion calculation unit (23) being configured to acquire a measurement value of the calibration solution that is measured by the chemical sensor, the conversion calculation unit (23) being configured to calculate and to output a conversion calculation output;
a calibration zero-point extraction unit (34) being configured to receive the conversion calculation output from the conversion calculation unit (23), the calibration zero-point extraction unit (34) being configured to extract a calibration zero-point from the conversion calculation output;
a calibration history storage unit (26) being configured to receive the calibration zero-point from the calibration zero-point extraction unit (34), the calibration history storage unit (26) being configured to store past histories of the calibration zero-point; and
a zero-point variation curve prediction unit (35) being configured to read the past histories of the calibration zero-point, the zero-point variation curve prediction unit (35) being configured to predict a zero-point variation curve based on the past histories of the calibration zero-point,
**characterized in that**
the zero-point variation curve prediction unit (35) is configured to continuously calculate a zero-point correction value based on the zero-point variation curve, the zero-point variation curve prediction unit (35) is further configured to supply the zero-point correction value to a zero-point correction part (13b) for performing a zero-point correction in a measurement apparatus;
further comprising a zero-point variation curve shift unit (27) being configured to cause the predicted zero-point variation curve to be matched to a newest value of the calibration zero-point.

6. The calibration apparatus according to claim 5, **characterized in that**
the chemical sensor (11) is configured to measure the calibration solution at a predetermined time interval, and the zero-point variation curve prediction unit (35) is configured to update the zero-point variation curve and the zero-point correction value at the predetermined time interval.

7. The calibration apparatus according to claim 5, **characterized in that**
the chemical sensor (11) is any one of a pH meter, a dissolved oxygen (DO) meter, and a chlorine meter.

8. A measurement system comprising,
a measurement apparatus (10) comprising:
a conversion calculation unit (13) being configured to acquire a first measurement value of a measurement solution that is measured by a chemical sensor (11), the conversion calculation unit (13) including a sensitivity correction part (13a), and
a calibration apparatus (20) according to any of claims 1 to 4.

9. A measurement system comprising:
a measurement apparatus (10) comprising:
a conversion calculation unit (13) being configured to acquire a first measurement value of a measurement solution that is measured by a chemical sensor (11), the conversion calculation unit including a zero-point correction part (13b), and
a calibration apparatus according to any of claims 5 to 7.

## Patentansprüche

1. Kalibrierungsvorrichtung (20), aufweisend:
einen chemischen Sensor (11), der konfiguriert ist, um eine Kalibrierungsflüssigkeit zu messen;
eine Umwandlungsberechnungseinheit (23), die konfiguriert ist, um einen Messwert der durch den chemischen Sensor (11) gemessenen Kalibrierungslösung zu akquirieren, wobei die Umwandlungsberechnungseinheit (23) konfiguriert ist, um eine Umwandlungsberechnungsausgabe zu berechnen und auszugeben;
eine Kalibrierungsempfindlichkeits-Extraktionseinheit (24), die konfiguriert ist, um die Umwandlungsberechnungsausgabe von der Umwandlungsberechnungseinheit (23) zu empfangen, wobei die Kalibrierungsempfindlichkeits-Extraktionseinheit (24) konfiguriert ist, um eine Kalibrierungsempfindlichkeit von der Umwandlungsberechnungsausgabe zu extrahieren;
eine Kalibrierungsverlaufs-Speichereinheit (26), die konfiguriert ist, um die Kalibrierungsempfindlichkeit von der Kalibrierungsempfindlichkeits-Extraktionseinheit (24) zu empfangen, wobei die Kalibrierungsverlaufs-Speichereinheit (26) konfiguriert ist, um vergangene Verläufe der Kalibrierungsempfindlichkeit zu speichern; und
eine Empfindlichkeitsvariationskurve-Vorhersageeinheit (25), die konfiguriert ist, um die vergangenen Verläufe der Kalibrierungsempfindlichkeit zu lesen, wobei die Empfindlichkeitsvariationskurve-Vorhersageeinheit (25) konfiguriert ist, um eine Empfindlichkeitsvariationskurve basierend auf den vergangenen Verläufen der Kalibrierungsempfindlichkeit vorherzusagen,
**dadurch gekennzeichnet, dass**
die Empfindlichkeitsvariationskurve-Vorhersageeinheit (25) konfiguriert ist, um einen Empfindlichkeitskorrekturwert (a " (t)) basierend auf der Empfindlichkeitsvariationskurve kontinuierlich zu berechnen, und den Empfindlichkeitskorrekturwert einem Empfindlichkeitskorrekturteil (13a) zum Durchführen einer Empfindlichkeitskorrektur in einer Messvorrichtung zuzuführen; und
ferner mit einer Empfindlichkeitsvariationskurve-Verschiebeeinheit (27), die konfiguriert ist, um zu bewirken, dass die vorhergesagte Empfindlichkeitsvariationskurve mit einem neuesten Wert der Kalibrierungsempfindlichkeit abzustimmen ist.

2. Kalibrierungsvorrichtung nach Anspruch 1, **dadurch gekennzeichnet, dass**
der chemische Sensor (11) konfiguriert ist, um die Kalibrierungslösung in einem vorbestimmten Zeitintervall zu messen; und
die Empfindlichkeitsvariationskurve-Vorhersageeinheit (25) konfiguriert ist, um die Empfindlichkeitsvariationskurve und den Empfindlichkeitskorrekturwert in dem vorbestimmten Zeitintervall zu aktualisieren.

3. Kalibrierungsvorrichtung nach Anspruch 1, **dadurch gekennzeichnet, dass**
der chemische Sensor (11) konfiguriert ist, um die Kalibrierungslösung zu irgendeinem Zeitpunkt zu messen, und die Empfindlichkeitsvariationskurve-Vorhersageeinheit (25) konfiguriert ist, um die Empfindlichkeitsvariationskurve und den Empfindlichkeitskorrekturwert zu irgendeinem Zeitpunkt zu aktualisieren.

4. Kalibrierungsvorrichtung nach Anspruch 1, **dadurch gekennzeichnet, dass**
der chemische Sensor (11) irgendeiner von einem pH-Messgerät, einem Gelöster-Sauerstoff- (DO) Messgerät, und einem Chlormessgerät ist.

5. Kalibrierungsvorrichtung (20), aufweisend:
einen chemischen Sensor (11), der konfiguriert ist, um eine Kalibrierungsflüssigkeit zu messen;
eine Umwandlungsberechnungseinheit (23), die konfiguriert ist, um einen Messwert der durch den chemischen Sensor gemessenen Kalibrierungslösung zu akquirieren, wobei die Umwandlungsberechnungseinheit (23) konfiguriert ist, um eine Umwandlungsberechnungsausgabe zu berechnen und auszugeben;
eine Kalibrierungsnullpunkt-Extraktionseinheit (34), die konfiguriert ist, um die Umwandlungsberechnungsausgabe von der Umwandlungsberechnungseinheit (23) zu empfangen, wobei die Kalibrierungsnullpunkt-Extraktionseinheit (34) konfiguriert ist, um einen Kalibrierungsnullpunkt aus der Umwandlungsberechnungsausgabe zu extrahieren;
eine Kalibrierungsverlaufs-Speichereinheit (26), die konfiguriert ist, um den Kalibrierungsnullpunkt von der Kalibrierungsnullpunkt-Extraktionseinheit (34) zu empfangen, wobei die Kalibrierungsverlaufs-Speichereinheit (26) konfiguriert ist, um vergangene Verläufe des Kalibrierungsnullpunkts zu speichern; und
eine Nullpunkt-Variationskurve-Vorhersageeinheit (35), die konfiguriert ist, um die vergangenen Verläufe des Kalibrierungsnullpunkts zu lesen, wobei die Nullpunkt-Variationskurve-Vorhersageeinheit (35) konfiguriert ist, um eine Nullpunkt-Variationskurve basierend auf den vergangenen Verläufen des Kalibrierungsnullpunkts vorherzusagen,
**dadurch gekennzeichnet, dass**
die Nullpunkt-Variationskurve-Vorhe.rsageeinheit (35) konfiguriert ist, um einen Nullpunkt-Korrekturwert basierend auf der Nullpunkt-Variationskurve kontinuierlich zu berechnen, wobei die Nullpunkt-Variationskurve-Vorhersageeinheit (35) ferner konfiguriert ist, um den Nullpunkt-Korrekturwert einem Nullpunkt-Korrekturteil (13b) zum Durchführen einer Nullpunktkorrektur in einer Messvorrichtung zuzuführen;
ferner mit einer Nullpunkt-Variationskurve-Verschiebeeinheit (27), die konfiguriert ist, um zu bewirken, dass die vorhergesagte Nullpunkt-Variationskurve mit einem neuesten Wert des Kalibrierungsnullpunkts abzustimmen ist.

6. Kalibrierungsvorrichtung nach Anspruch 5, **dadurch gekennzeichnet, dass**
der chemische Sensor (11) konfiguriert ist, um die Kalibrierungslösung in einem vorbestimmten Zeitintervall zu messen, und die Nullpunkt-Variationskurve-Vorhersageeinheit (35) konfiguriert ist, um die Nullpunkt-Variationskurve und den Nullpunkt-Korrekturwert in dem vorbestimmten Zeitintervall zu aktualisieren.

7. Kalibrierungsvorrichtung nach Anspruch 5, **dadurch gekennzeichnet, dass**
der chemische Sensor (11) irgendeiner von einem pH-Messgerät, einem Gelöster-Sauerstoff- (DO) Messgerät, und einem Chlormessgerät ist.

8. Messsystem, aufweisend:
eine Messvorrichtung (10), aufweisend:
eine Umwandlungsberechnungseinheit (13), die konfiguriert ist, um einen ersten Messwert einer durch einen chemischen Sensor (11) gemessenen Messlösung zu akquirieren, wobei die Umwandlungsberechnungseinheit (13) einen Empfindlichkeitskorrekturteil (13a) umfasst, und
eine Kalibrierungsvorrichtung (20) nach einem der Ansprüche 1 bis 4.

9. Messsystem, aufweisend:
eine Messvorrichtung (10), aufweisend:
eine Umwandlungsberechnungseinheit (13), die konfiguriert ist, um einen ersten Messwert einer durch einen chemischen Sensor (11) gemessenen Messlösung zu akquirieren, wobei die Umwandlungsberechnungseinheit einen Nullpunkt-Korrekturteil (13b) umfasst, und
eine Kalibrierungsvorrichtung nach einem der Ansprüche 5 bis 7.

## Revendications

1. Dispositif (20) d'étalonnage comprenant
un capteur (11) chimique configuré pour mesurer un liquide d'étalonnage ;
une unité (23) de calcul de conversion configurée pour acquérir une valeur de mesure de la solution d'étalonnage qui est mesurée par le capteur (11) chimique, l'unité (23) de calcul de conversion étant configurée pour calculer et pour sortir une sortie de calcul de conversion ;
une unité (24) d'extraction d'une sensibilité d'étalonnage configurée pour recevoir la sortie de calcul de conversion de l'unité (23) de calcul de conversion, l'unité (24) d'extraction d'une sensibilité d'étalonnage étant configurée pour extraire une sensibilité d'étalonnage de la sortie de calcul de conversion ;
une unité (26) de mémorisation d'un historique d'étalonnage configurée pour recevoir la sensibilité d'étalonnage de l'unité (24) d'extraction d'une sensibilité d'étalonnage, l'unité (26) de mémorisation d'un historique d'étalonnage étant configurée pour mémoriser les historiques passés de la sensibilité d'étalonnage et
une unité (25) de prédiction d'une courbe de variation de la sensibilité configurée pour lire les historiques passés de la sensibilité d'étalonnage, l'unité (25) de prédiction d'une courbe de variation de la sensibilité étant configurée pour prédire une courbe de variation de la sensibilité sur la base des historiques passés de la sensibilité d'étalonnage,
**caractérisé en ce que**
l'unité (25) de prédiction d'une courbe de variation de la sensibilité est configurée pour calculer en continu une valeur (a"(t)) de correction de la sensibilité sur la base de la courbe de variation de la sensibilité et pour envoyer la valeur de correction de la sensibilité à une partie (13a) de correction de la sensibilité pour effectuer une correction de sensibilité dans un dispositif de mesure et
comprenant, en outre, une unité (27) de décalage d'une courbe de variation de la sensibilité configurée pour faire que la courbe de variation de la sensibilité prédite soit adaptée à une valeur la plus nouvelle de la sensibilité d'étalonnage.

2. Dispositif d'étalonnage suivant la revendication 1, **caractérisé en ce que**
le capteur (11) chimique est configuré pour mesurer la solution d'étalonnage à un intervalle de temps déterminé à l'avance et
l'unité (25) de prédiction de la courbe de variation de la sensibilité est configurée pour mettre à jour la courbe de variation de la sensibilité et la valeur de correction de la sensibilité à l'intervalle de temps déterminé à l'avance.

3. Dispositif d'étalonnage suivant la revendication 1, **caractérisé en ce que**
le capteur (11) chimique est configuré pour mesurer la solution d'étalonnage à n'importe quel moment et l'unité (25) de prédiction de la courbe de variation de la sensibilité est configurée pour mettre à jour la courbe de variation de la sensibilité et la valeur de la correction de la sensibilité à n'importe quel moment.

4. Dispositif d'étalonnage suivant la revendication 1, **caractérisé en ce que**
le capteur (11) chimique est l'un quelconque d'un dispositif de mesure du pH, d'un dispositif de mesure de l'oxygène dissout (DO) et d'un dispositif de mesure du chlore.

5. Dispositif (20) d'étalonnage comprenant :
un capteur (11) chimique configuré pour mesurer un liquide d'étalonnage ;
une unité (23) de calcul de conversion configurée pour acquérir une valeur de mesure de la solution d'étalonnage qui est mesurée par le capteur (11) chimique, l'unité (23) de calcul de conversion étant configurée pour calculer pour sortir une sortie de calcul de conversion ;
une unité (34) d'extraction du point zéro d'étalonnage configurée pour recevoir la sortie de calcul de conversion de l'unité (23) de calcul de conversion, l'unité (34) d'extraction du point zéro d'étalonnage étant configurée pour extraire un point zéro d'étalonnage de la sortie de calcul de conversion ;
une unité (26) de mémorisation d'un historique d'étalonnage configurée pour recevoir le point zéro d'étalonnage de l'unité (34) d'extraction du point zéro d'étalonnage, l'unité (26) de mémorisation d'un historique d'étalonnage étant configurée pour mémoriser les historiques passés du point zéro d'étalonnage et
une unité (35) de prédiction d'une courbe de variation du point zéro configurée pour lire les historiques passés du point zéro d'étalonnage, l'unité (35) de prédiction d'une courbe de variation du point zéro étant configurée pour prédire une courbe de variation du point zéro sur la base des historiques passés du point zéro d'étalonnage,
**caractérisé en ce que**
l'unité (35) de prédiction d'une course de variation du point zéro est configurée pour calculer en continu une valeur de correction du point zéro sur la base de la courbe de variation du point zéro, l'unité (35) de prédiction d'une courbe de variation du point zéro étant configurée, en outre, pour envoyer la valeur de correction du point zéro à une partie (13b) de correction du point zéro pour effectuer une correction du point zéro dans un dispositif de mesure ;
comprenant, en outre, une unité (27) de décalage d'une courbe de variation du point zéro configurée pour faire que la courbe de variation du point zéro prédite soit adaptée à une valeur la plus nouvelle du point zéro d'étalonnage.

6. Dispositif suivant la revendication 5,
**caractérisé en ce que**
le capteur (11) chimique est configuré pour mesurer la solution d'étalonnage à un intervalle de temps déterminé à l'avance et l'unité (35) de prédiction de la courbe de variation du point zéro est configurée pour mettre à jour la courbe de variation du point zéro et la valeur de correction du point zéro à l'intervalle de temps déterminé à l'avance.

7. Dispositif suivant la revendication 5,
**caractérisé en ce que**
le capteur (11) chimique est l'un quelconque d'un dispositif de mesure du pH, d'un dispositif de mesure de l'oxygène dissout (DO) et d'un dispositif de mesure du chlore.

8. Système de mesure comprenant,
un dispositif (10) de mesure comprenant :
une unité (13) de calcul de conversion configurée pour acquérir une première valeur de mesure d'une solution de mesure qui est mesurée par un capteur (11) chimique, l'unité (13) de calcul de conversion comprenant une partie (13a) de correction de la sensibilité et
un dispositif (20) d'étalonnage suivant l'une quelconque des revendications 1 à 4.

9. Système de mesure comprenant,
un dispositif (10) de mesure comprenant :
une unité (13) de calcul de conversion configurée pour acquérir une première valeur de mesure d'une solution de mesure qui est mesurée par un capteur (11) chimique, l'unité de calcul de conversion comprenant une partie (13a) de correction du point zéro et
un dispositif (20) d'étalonnage suivant l'une quelconque des revendications 5 à 7.
